# EUROPÄISCHE PATENTSCHRIFT

(11) **EP 1 447 323 B1**
(45) Veröffentlichungstag und Bekanntmachung des Hinweises auf die Patenterteilung: **21.12.2005**
(21) Anmeldenummer: 04002635.3
(22) Anmeldetag: 06.02.2004
(51) Int. Cl.: B63G 8/00

(54) **Unterseeboot mit einem Flüssigasdruckbehälter**
Submarine with a tank containing a pressurised liquid gas
Sous-marin avec un réservoir contenant un gaz liquide sous pression

(30) Priorität: 12.02.2003 DE 10305778
(43) Veröffentlichungstag der Anmeldung: 18.08.2004
(73) Patentinhaber: Howaldtswerke-Deutsche Werft GmbH, 24143 Kiel (DE)
(72) Erfinder: Kellermann, Thammo, Dipl.-Ing., 23568 Lübeck (DE); Peterich, Dieter, Dipl.-Ing., 24610 Trappenkamp (DE); Pommer, Hans, Dipl.-Ing., 24360 Barkelsby (DE); Sattler, Gunter, Dipl.-Ing., 23568 Lübeck (DE)
(74) Vertreter: Vollmann, Heiko

(56) Entgegenhaltungen:
- FR-A- 1 484 918
- PSOMA A ET AL: "Fuel cell systems for submarines: from the first idea to serial production" JOURNAL OF POWER SOURCES, ELSEVIER SEQUOIA S.A. LAUSANNE, CH, Bd. 106, Nr. 1-2, 1. April 2002 (2002-04-01), Seiten 381-383, XP004348713 ISSN: 0378-7753
- HAMMERSCHMIDT A ET AL: "DIE BRENNSTOFFZELLE UND WASSERSTOFFERZEUGNUNG MITTELS REFORMER FUELL CELLS AND HYDROGEN GENERATION WITH REFORMER" JAHRBUCH DER SCHIFFBAUTECHNISCHEN GESELLSCHAFT, BERLIN, DE, Bd. BAND 92, 1998, Seiten 275-281, XP000931151 ISSN: 0374-1222
- SATTLER G: "Fuel cells going on-board" JOURNAL OF POWER SOURCES, ELSEVIER SEQUOIA S.A. LAUSANNE, CH, Bd. 86, Nr. 1-2, März 2000 (2000-03), Seiten 61-67, XP004194100 ISSN: 0378-7753
- POMMER H: "BRENNSTOFFZELLEN ALS AUSSENLUFTUNABHAENGIGE ANTRIEBSKOMPONENTE FUER UBOOTE" SCHIFF UND HAFEN, SEEHAFEN-VERLAG ERIK BLUMENFELD. HAMBURG, DE, Bd. 44, Nr. 8, 1. August 1992 (1992-08-01), Seiten 48-51, XP000288856 ISSN: 0938-1643

## Beschreibung

Die Erfindung betrifft ein Unterseeboot mit einem Flüssiggasdruckbehälter, insbesondere einem Druckbehälter zur Lagerung flüssigen Sauerstoffs.

Unterseeboote, insbesondere für den militärischen Einsatz werden unter Wasser üblicherweise aus Batterien mit elektrischer Energie versorgt. Zunehmend werden auch Energiewandler zur Erzeugung der elektrischen Energie aus einem Energieträger, zum Beispiel Wasserstoff und einem Oxidationsmittel, zum Beispiel Sauerstoff eingesetzt. Hiefür eignen sich insbesondere Brennstoffzellen, in denen der Energieträger unter Erzeugung elektrischer Energie und Wärme katalytisch oxidiert wird. Als Oxidationsmittel kommt bei diesen Systemen typischerweise ein sauerstoffhaltiges Gas, wie beispielsweise Luft oder aber bevorzugt reiner Sauerstoff zum Einsatz, der tiefkalt und flüssig gelagert wird.

Es ist bekannt, wie flüssiger Sauerstoff (LOX) an Land zu lagern ist, um ausreichende Sicherung zu gewährleisten. Diese geltenden Regeln reichen jedoch für die sichere Lagerung von flüssigen und/oder gasförmigen Sauerstoff bei einem Unterseeboot, insbesondere für den militärischen Einsatz nicht aus.

Die Lagerung von flüssigem Sauerstoff in Unterseebooten ist in dem Artikel "Fuel cell systems for submarines: from the first idea to serial production", JOURNAL OF POWER SOURCES, ELSEVIER SEQUOIA S.A. LAUSANNE, CH, Bd. 106, Nr. 1 - 2, 1. April 2002 (2002-04-01), Seiten 381 - 383, XP004348713 ISSN: 0378-7753 von Psoma, A. und Sattler, G. beschrieben. Flüssiger Sauerstoff wird in doppelwandigen, vakuumisolierten Tanks gespeichert, die zusammen mit Armaturen, einer Sicherheits- und Überwachungsausrüstung sowie einem Verdampfer außerhalb des Druckkörpers angeordnet sind und deshalb so ausgebildet sind, dass sie Stoßbelastungen und dem Tauchdruck widerstehen können.

Die Lagerung von flüssigem Sauerstoff in einem außerhalb des Druckkörpers angeordneten Flüssiggasdruckbehälter ist jedoch systembedingt eher ungünstig, da die Anbringung eines oder mehrerer Druckbehälter außerhalb des eigentlichen Druckkörpers des U-Bootes technisch vergleichsweise aufwändig ist, da schon aus strömungstechnischen Gründen sowie auch aus Gründen der Gewichtsverteilung es nicht möglich ist, einen vergleichsweise großen Behälter vorzusehen, sondern mehrere kleine Behälter, die außen am Druckkörper des Unterwasserfahrzeugs anzubringen und strömungstechnisch zu umkleiden sind. Nur so kann sichergestellt werden, dass bei etwaigen Leckagen des Druckbehälters kein Sauerstoff in das innere des Druckkörpers des U-Bootes gelangt.

Vor diesem Hintergrund liegt der Erfindung die Aufgabe zugrunde, ein Unterseeboot so auszubilden, dass die Lagerung und Führung von flüssigem Sauerstoff vereinfacht wird, ohne die Sicherheit des Bootes und der mitfahrenden Personen zu gefährden.

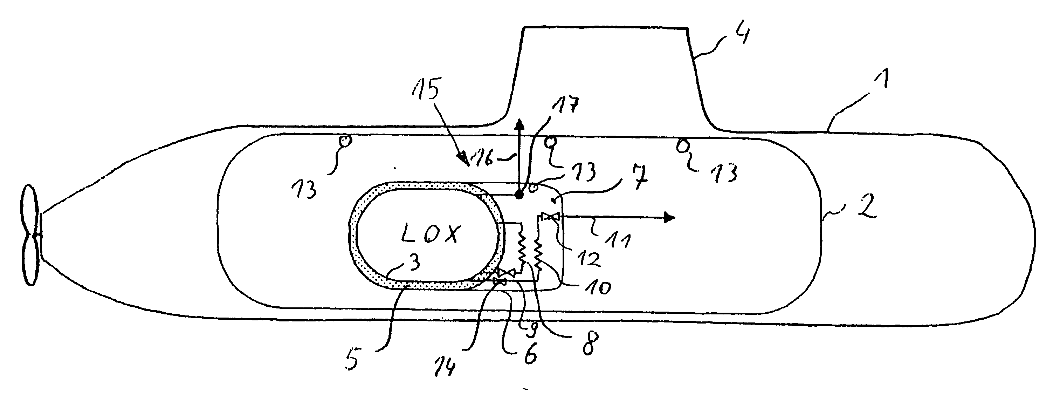

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Demgemäß sieht die Erfindung vor, den Flüssiggasdruckbehälter innerhalb des Druckkörpers des Unterseebootes anzuordnen. Um hierbei die Sicherheit von Boot und Mensch zu gewährleisten ist jedoch der Flüssiggasdruckbehälter von einem äußeren Druckbehälter umgeben, der ebenfalls innerhalb des Druckkörpers des Unterseebootes gelagert ist. Darüber hinaus sind Vorkehrungen getroffen, die dafür sorgen, dass beim Überschreiten eines vorgegebenen Drucks innerhalb eines Druckbehälters Fluid vom Druckbehälter aus dem Druckkörper des U-bootes heraus geleitet wird.

Die Innenlagerung des Flüssiggassauerstoffbehälters bietet für die konzeptionelle Auslegung des Unterwasserfahrzeugs deutliche Vorteile, so dass das Fahrzeug kleiner und kostengünstiger ist als ein vergleichbares Fahrzeug mit Sauerstoffaußenlagerung.

Die Anordnung des Flüssiggasdruckbehälters innerhalb des Druckkörpers des U-Boots hat erhebliche Vorteile. Durch den stabilen Druckkörper des U-boots ist auch der Flüssigkeitsdruckbehälter gut geschützt, insbesondere auch in Hinblick auf militärtypische Belastungen. Ein weiterer wesentlicher Vorteil ist, dass der Flüssigkeitsdruckbehälter auch in getauchten Zustand des Bootes zugänglich bleibt. Aufgrund des Schutzes durch den Druckkörper kann der Flüssiggasdruckbehälter leichter ausgebildet sein. Auch ergeben sich Vorteile hinsichtlich der Isolierung des Druckbehälters, da, anders als bei außen liegenden Flüssiggasdruckbehälter, die Isolierung keiner zusätzlichen Belastung durch den Tauchdruck unterliegt. Schließlich ergeben sich auch Kostenvorteile, da der Bau eines oder gegebenenfalls zwei innen liegender Flüssiggasdruckbehälter wesentlich kostengünstiger ist als eine Vielzahl außen liegender Druckbehälter vorzusehen. Da die Isolierschicht unabhängig von der Größe bei gleicher Isolierwirkung stets gleich dick sein muss, ergeben sich zudem räumliche Vorteile, da mit zunehmender Größe des Flüssiggasdruckbehälters das pro Liter Flüssigkeit sich für die Lagerung ergebende erforderliche Volumen kleiner wird. Schließlich ergibt eine Lagerung des Flüssiggasdruckbehälters innerhalb des Druckkörpers neben den strömungstechnischen Vorteilen auch noch gewichtstechnische Vorteile, da bei außen liegenden Flüssiggasbehältern diese regelmäßig nur im oberen Bereich des Bootes angeordnet werden können, weshalb das Behältergewicht stets beim Auftauchen mit angehoben werden muss. Dies ist bei einem innen liegenden Flüssiggasdruckbehälter bei geeigneter und bevorzugter Lagerung beispielsweise vor dem Dieselmotor und hinter der Zentrale oder zwischen den Batterieräumen, nicht der Fall.

Durch den gemäß der Erfindung vorgesehen äußeren Druckbehälter sowie gegebenenfalls weitere sicherheitstechnische Maßnahmen, die weiter unten noch im Einzelnen erörtert werden, wird erreicht, dass auch bei innerhalb des Druckkörpers liegendem Flüssiggasdruckbehälter eine Sicherheit erreicht wird, die der bei außen liegenden vergleichbar ist oder diese sogar übertrifft. Hierzu sieht die Erfindung neben dem äußeren Druckbehälter, der im Falle eines Versagens oder Teilversagens des Flüssiggasdruckbehälters dafür sorgt, dass weder Flüssiggas noch Gas in das Innere des Druckkörpers des Bootes gelangen kann, zusätzlich Mittel vor, welche in einem solchen Störfall dafür sorgen, dass der im äußeren Druckbehälter befindliche flüssige oder gasförmige Sauerstoff nicht nur aus dem äußeren Druckbehälter, sondern darüber hinaus auch aus dem Druckkörper heraus geleitet werden kann, so dass sich hier kein kritischer Druck aufbauen kann, welcher das Bootsinnere gefährden könnte. Ein entstehender unzulässig hoher Druck wird nach außerhalb des Druckkörpers abgebaut.

Gemäß einer vorteilhaften Ausgestaltung der Erfindung umfasst der äußere Druckbehälter nicht nur den Flüssiggasdruckbehälter sondern darüber hinaus auch sämtliche aus dem Flüssiggasdruckbehälter gespeisten Flüssiggas führenden Leitungen und Armaturen einschließlich eines Verdampfers, welcher durch Energiezufuhr in Form von Wärmeenergie den aus dem Flüssiggasdruckbehälter kommenden flüssigen Sauerstoff in gasförmigen umwandelt. Es ist also der gesamte sicherheitstechnisch kritische Bereich, nämlich überall dort, wo flüssiger, tiefkalter Sauerstoff gehandhabt werden muss, ein Schutz durch den äußeren Druckbehälter sichergestellt. Es kann also auch selbst im Fall des Abreißen eines Ventils, des Berstens einer Leitung, oder dem Überschreiten der kritischen Temperatur im Flüssiggasdruckbehälter stets sichergestellt werden, dass der Druck nach außen hin abgebaut bzw. der Sauerstoff zum Druckabbau nach außen geleitet wird und nicht in das Druckkörperinnere gelangen kann. Hierzu ist eine Leitung vorgesehen, welche den äußeren Druckbehälter sowie den Druckkörper des Unterseebootes durchsetzt, die Mittels einer Sicherheitseinrichtung abgesperrt ist, und erst im Falle eines vorbestimmten Überdrucks innerhalb des äußeren Druckbehälters und/oder des Flüssiggasdruckbehälters öffnet. Eine solche Sicherheitseinrichtung kann beispielsweise durch ein Überdruckventil oder eine Berstscheibe gebildet sein, die bei Überschreiten eines vorbestimmten Drucks durch bleibende Zerstörung den Leitungsquerschnitt freigibt.

Um auch in getauchtem Zustand sicherstellen zu können, dass beim Aufbau eines unzulässig hohen Drucks im äußeren Druckbehälter dieser über die Leitung nach außen abgebaut wird, ist es entweder erforderlich, den äußeren und vorzugsweise auch den inneren Druckbehälter so zu dimensionieren, dass er dem Tauchtiefendruck, also dem auf das Boot bei bis zu Tauchtiefe wirkenden Drucks aushält oder aber eine Druckerhöhungsvorrichtung vorzusehen, welche gewährleistet, dass schon bei geringeren Drücken innerhalb des äußeren Druckbehälters das Fluid zuverlässig nach außen gefördert werden kann, und zwar unabhängig von der Tauchtiefe. Eine solche Druckerhöhungseinrichtung kann beispielsweise aus einer Kolben-Zylinder-Anordnung bestehen, bei welcher dies über ein entsprechendes Flächenverhältnis erreicht wird oder aber auch durch entsprechende sichere Pumpen. Bevorzugt ist die Druckerhöhungseinrichtung so konstruiert, dass sie unter Ausnutzung des im äußeren Druckbehälter befindlichen Drucks arbeitet, sie kann jedoch gegebenenfalls auch unter Ausnutzung des in Flüssiggasdruckbehälter herrschenden Drucks arbeiten oder in anderer geeigneter Weise.

Sicherheitstechnisch besonders günstig ist es, wenn der Flüssiggosdruckbehälter so dimensioniert ist, dass sein zulässiger Betriebsüberdruck der Tauchtiefe des Unterseebootes entspricht, da dann in einem Störfall, wenn aufgrund des Öffnens einer Sicherheitseinrichtung das Innere des Flüssiggasdruckbehälters mit dem umgebenden Medium des Unterseebootes verbunden wird, keinerlei Gefahr besteht, dass der Flüssiggasdruckbehälter diesem Druck nicht standhalten könnte. So ist es sicherheitstechnisch ebenso zweckmäßig, den äußeren Druckbehälter so zu dimensionieren, dass sein zulässiger Betriebsüberdruck mindestens dem Druck der Tauchtiefe des Unterseebootes entspricht.

Nach einer vorteilhaften Weiterbildung der Erfindung ist innerhalb des äußeren Druckbehälters innerhalb des Armaturenraums ein Absperrventil vorgesehen, nämlich für die aus dem äußeren Druckbehälter in dem Druckkörper führenden Gasleitung. Durch ein solches Ventil kann der äußere Druckbehälter gegenüber dem Bootsinneren hermetisch abgeschlossen werden. Dies ist nicht nur zweckmäßig bei einem der vorgenannten Störfälle, bei denen innerhalb des äußeren Druckbehälters ein erhöhter Druck aufgebaut wird, sondern darüber hinaus auch in solchen Fällen, in denen im inneren des Unterseebootes eine erhöhte Gaskonzentration detektiert wird und somit vorsorglich die Gas-, insbesondere Sauerstoffzufuhr zentral und zuverlässig abgestellt werden muss. Bevorzugt ist insbesondere für diesen Störfall eine weitere Sicherheitseinrichtung vorgesehen, bestehend aus entsprechenden Gas-, insbesondere Sauerstoffsensoren sowie einer entsprechenden Auswert- und Steuerelektronik, welche im Falle einer vorbestimmten Gaskonzentration das Absperrventil schließend ansteuert.

Vorteilhaft sind Gassensoren nicht nur innerhalb des Druckkörpers vorgesehen, sondern auch (zumindest ein Gas- oder Drucksensor) innerhalb des äußeren Druckbehälters und des Armaturenraumes, um festzustellen ob aus dem Flüssiggasdruckbehälter, einer Flüssiggas und Gas führenden Leitung oder einer Armatur Gas, insbesondere Sauerstoff austritt, um in einem solchen Störfall zumindest das den Flüssiggasdruckbehälter absperrende Ventil entsprechend anzusteuern sowie vorteilhaft auch das Ventil sperrend zu schalten, welches die aus dem äußeren Druckbehälter in den Druckkörper führende Leitung absperrt.

Die Erfindung ist nachfolgend anhand eines in der Zeichnung dargestellten Ausführungsbeispiels näher erläutert. Die Figur zeigt in vereinfachter Darstellung den Aufbau eines erfindungsgemäßen Unterseebootes mit innerhalb des Druckkörpers befindlichen Flüssiggassauerstofftankbehälter.

Bei dem dargestellten Unterwasserfahrzeug ist mit 1 die äußere Hülle des Fahrzeugs gekennzeichnet, welche die strömungstechnisch wirksame Form des Bootes bestimmt. Innerhalb dieser Hülle 1 ist ein zylindrischer Druckkörper 2 angeordnet, wie dies bei U-Booten erforderlich und üblich ist. Innerhalb dieses Druckkörpers 2 ist ein Flüssiggasdruckbehälter 3 für flüssigen Sauerstoff (LOX) angeordnet, und zwar im Bereich zwischen dem in der Figur nicht dargestellten im hinteren Bereich angeordneten Maschinenraum und der Zentrale unterhalb des Turms 4. Der Flüssiggasdruckbehälter 3 ist für die Lagerung von flüssigem, tiefkalten Sauerstoff vorgesehen, er weist eine im Wesentlichen zylindrische und an den Enden halbkugelförmige Form auf und ist an seiner Außenseite mit einer Isolierung 5 versehen, welche in an sich bekannter Weise mit einem strahlungsdämmenden Material sowie einem evakuierten Raum besteht. Diese Isolierung 5 ist an der Außenseite des Flüssiggasdruckbehälters 3 aufgebracht und liegt an der Innenseite eines äußeren Druckbehälters 6 an, der ebenfalls im Wesentlichen eine zylindrische Form aufweist und den Flüssiggasdruckbehälter 3 einschließlich dessen Isolierung 5 umgibt. Sowohl der Druckbehälter 3 als auch der Druckbehälter 6 sind so ausgelegt, dass ihr zulässiger Betriebsüberdruck dem Druck der Tauchtiefe des Unterseebootes entspricht.

Der äußere Druckbehälter 6 überragt den Flüssiggasdruckbehälter 3 zu einer Seite deutlich, so dass ein Armaturenraum 7 gebildet ist, der sämtliche Flüssigsauerstoff führenden Leitungen, Armaturen und Aggregate umfasst. In diesem Armaturenraum ist ein Wärmetauscher 8 angeordnet über den der Arbeitsdruckaufbau zur Förderung des flüssigen Sauerstoffs aus dem Behälter 3 erfolgt. Der Wärmetauscher 8 ist in der Isolierung 5 angeordnet und wird extern gespeist.

Nahe dem Boden des Behälters 3 ist eine LOX führende Leitung 9 aus dem Flüssiggasdruckbehälter herausgeführt, die diesen mit einem ebenfalls extern gespeisten Verdampfer 10 verbindet, in dem der aus der Leitung 9 kommende flüssige Sauerstoff 10 verdampft wird. Der gasförmige Sauerstoff wird vom Verdampfer 10 über eine Leitung 11 aus dem Druckbehälter 6 heraus geführt. Die Leitung 11 ist über ein steuerbares Absperrventil 12 verschließbar, das Absperrventil ist innerhalb des äußeren Druckbehälters 6 angeordnet.

Beim normalen Betrieb wird über den Wärmetauscher 8 dem Flüssiggasdruckbehölter 3 Wärme zugeführt, bis sich ein zur Förderung des flüssigen Sauerstoffs erforderliche Arbeitsdruck aufgebaut hat. Der flüssige Sauerstoff gelangt über die Leitung 9 zum Verdampfer 10, von dort gasförmig über die Leitung 11 durch das geöffnete Absperrventil 12 aus dem äußeren Druckbehälter 6 heraus in das innere des Druckkörpers 2 und dort zu einem Verbraucher, beispielsweise einem Brennstoffzellenstapel.

Innerhalb des Druckkörpers 2 sind Sauerstoffsensoren 13 vorgesehen, welche den Sauerstoffgehalt innerhalb des Druckkörpers 2 erfassen. Diese Sauerstoffsensoren 13 sind mit einer nicht dargestellten elektronischen Auswert- und Steuereinrichtung verbunden, derart, dass bei Überschreiten eines vorbestimmten Sauerstoffgehalts innerhalb des Druckkörpers 2 dies erfasst wird und das Absperrventil 12 schließend angesteuert wird, um sicherzustellen, dass kein weiterer Sauerstoff über die Leitung 11 austritt.

Der Armaturenraum 7 ist ebenfalls mit mindestens einem Druck- oder auch Sauerstoffsensor 13 ausgestattet und evakuiert, so dass eine Undichtigkeit in einer der dort befindlichen Leitungen oder Aggregate dektierbar ist. Sobald eine solche Undichtigkeit erfasst wird, wird die Leitung 9 druckbehälterseitig mittels eines Absperrventils 14 abgesperrt, um einen weiteren Sauerstoffeintritt in den Raum des äußeren Druckbehälters 6 zu vermeiden. Auch das Ventil 12 wird abgesperrt, um den äußeren Druckbehälter 6 gegenüber dem Druckkörper 2 abzuschließen.

Der Flüssiggasdruckbehälter 3 sowie der äußere Druckbehälter 6 sind mit einer gemeinsamen Abblaseinrichtung 15 versehen, welche eine aus dem Druckkörper 2 herausführende Leitung 16 aufweist, die mittels eines Sicherheitsventils 17 oder einer Berstscheibe abgeschlossen ist und im Freien mündet. Bei einem unzulässig hohen Druckanstieg innerhalb des Flüssiggasdruckbehälters 3 wird über diese Abblaseinrichtung 15 in einem solchen Störfall eine Leitungsverbindung nach außerhalb des Druckkörpers 2 geschaffen, über welche der Druck nach außen hin abgebaut werden kann. Da sowohl der Druckbehälter 3 als auch der Druckbehälter 6 so druckfest konzipiert sind, dass sie einem über die Leitung 16 anstehenden Innendruck entsprechend der Tauchtiefe des U-Bootes standhalten, gewährleistet, dass der Druck innerhalb des Druckbehälters 3 bzw. des Druckbehälters 6 nicht unzulässig hoch ansteigt.

Eine Abblaseinrichtung 15 kann auch gesondert für den Flüssiggasdruckbehälter 3 und den äußeren Druckbehälter 6 vorgesehen sein, dann erfolgt beim Überschreiten eines vorbestimmten Druckes eine unmittelbare Leitungsverbindung des Druckbehälters 3 mit der Umgebung des Unterwasserfahrzeuges bzw. des äußeren Druckbehälters 6 mit der Umgebung des Unterwasserfahrzeuges.

### Bezugszeichenliste

- 1 -: Hülle
- 2 -: Druckkörper
- 3 -: Flüssiggasdruckbehälter
- 4 -: Turm
- 5 -: Isolierung
- 6 -: äußerer Druckbehälter
- 7 -: Armaturenraum
- 8 -: Wärmetauscher
- 9 -: LOX-Leitung
- 10 -: Verdampfer
- 11 -: Leitung für O₂
- 12 -: Absperrventil
- 13 -: Sauerstoffsensoren
- 14 -: Absperrventil
- 15 -: Abblaseinrichtung
- 16 -: Leitung
- 17 -: Sicherheitsventil

## Patentansprüche

1. Unterseeboot mit einem Flüssiggasdruckbehälter (3), insbesondere einem Druckbehälter zur Lagerung flüssigen Sauerstoffs (LOX) wobei der Flüssiggasdruckbehälter (3) innerhalb des Druckkörpers (2) des Unterseebootes angeordnet ist und von einem äußeren Druckbehälter (6) umgeben ist, der ebenfalls innerhalb des Druckkörpers (2) des Unterseebootes gelagert ist, **dadurch gekennzeichnet, dass** Mittel vorgesehen sind, welche beim Überschreiten eines vorgegebenen Drucks innerhalb eines der Druckbehälter (3, 6) Fluid vom Druckbehälter (3, 6) aus dem Druckkörper (2) heraus leiten.

2. , Unterseeboot nach Anspruch 1, **dadurch gekennzeichnet, dass** der äußere Druckbehälter (6) auch sämtliche aus dem Flüssiggasdruckbehälter (3) gespeisten Flüssiggas führenden Leitungen (9) und Armaturen (12, 14) einschließlich eines Verdampfers (10) umfasst.

3. Unterseeboot nach einem der vorhergehenden Ansprüche, bei dem der äußere Druckbehälter (6) mit einer aus dem Druckkörper (2) des Unterseebootes herausführenden Leitung (16) versehen ist, die mittels einer Sicherheitseinrichtung (17) abgesperrt ist.

4. Unterseeboot nach einem der vorhergehenden Ansprüche, bei dem die Sicherheitseinrichtung ein Überdruckventil (17) ist.

5. Unterseeboot nach einem der vorhergehenden Ansprüche, bei dem die Sicherheitseinrichtung eine Berstscheibe ist.

6. Unterseeboot nach einem der vorhergehenden Ansprüche, bei dem eine Druckerhöhungseinrichtung vorgesehen ist, welche ein Abführen von Fluid aus dem äußeren Druckbehälter (6) auch in getauchtem Zustand sicherstellt.

7. Unterseeboot nach einem der vorhergehenden Ansprüche, bei dem Mittel (16, 17) vorgesehen sind, welche beim Überschreiten eines vorgegebenen Drucks im Flüssiggasdruckbehälter (3) Gas und/oder Flüssiggas nach außerhalb des Druckkörpers (2) leiten.

8. Unterseeboot nach einem der vorhergehenden Ansprüche, bei dem die Druckerhöhungseinrichtung unter Ausnutzung des im äußeren Druckbehälter (6) und/oder im Flüssiggasdruckbehälter (3) herrschenden Druckes arbeitet.

9. Unterseeboot nach einem der vorhergehenden Ansprüche, bei dem der Flüssiggasdruckbehälter (3) so dimensioniert ist, dass sein zulässiger Betriebsüberdruck mindestens dem Druck in Tauchtiefe des Unterseebootes entspricht.

10. Unterseeboot nach einem der vorhergehenden Ansprüche, bei dem der äußere Druckbehälter (6) so dimensioniert ist, dass sein zulässiger Betriebsüberdruck mindestens dem Druck in Tauchtiefe des Unterseebootes entspricht.

11. Unterseeboot nach einem der vorhergehenden Ansprüche, bei dem ein innerhalb des äußeren Druckbehälters (6) angeordnetes Absperrventil (12) für die aus dem äußeren Druckbehälter (6) in den Druckkörper (2) führende Gasleitung (11) vorgesehen ist.

12. Unterseeboot nach einem der vorhergehenden Ansprüche, bei dem das Absperrventil (12) in Abhängigkeit der Gaskonzentration im Druckkörper (2) gesteuert ist.

13. Unterseeboot nach einem der vorhergehenden Ansprüche, bei dem mindestens ein Gassensor (13) zur Ermittlung der Gaskonzentration innerhalb des Druckkörpers (2) vorgesehen ist.

14. Unterseeboot nach einem der vorhergehenden Ansprüche, bei dem eine Steuerung vorgesehen ist, welche das Absperrventil (12) beim Überschreiten einer vorbestimmten Gaskonzentration im Druckkörper (2) schließend ansteuert.

15. Unterseeboot nach einem der vorhergehenden Ansprüche, bei dem mindestens ein Drucksensor oder Gassensor (13) innerhalb des äußeren Druckbehälters (6) angeordnet ist, und dass Mittel (14) vorgesehen sind, die bei Erfassung von erhöhten Druck oder erhöhter Gaskonzentration im äußeren Druckbehälter (6) insbesondere im Armaturenraum (7) die Flüssiggaszufuhr aus dem Flüssiggasdruckbehälter (3) absperren.

## Claims

1. A submarine with a liquid gas pressure container (3), in particular with a pressure container for storing liquid oxygen (LOX), wherein the liquid gas pressure container (3) is arranged within the pressure hull (2) of the submarine and is surrounded by an outer pressure container (6) which is likewise stored within the pressure hull (2) of the submarine, **characterised in that** means are provided which on exceeding a predefined pressure within one of the pressure containers (3, 6) lead fluid from the pressure container (3, 6) out of the pressure hull (2).

2. A submarine according to claim 1, **characterised in that** the outer pressure container (6) encompasses also all conduits (9) which lead fluid gas supplied from the liquid gas pressure container (3) and fittings (12, 14), including an evaporator (10).

3. A submarine according to one of the preceding claims, **characterised in that** the outer pressure container (6) is provided with a conduit (16) which leads out of the pressure hull (2) of the submarine and which is blocked off by way of a safety means (17).

4. A submarine according to one of the preceding claims, **characterised in that** the safety means is a pressure relief valve (17).

5. A submarine according to one of the preceding claims, **characterised in that** the safety means is a rupture disk.

6. A submarine according to one of the preceding claims, **characterised in that** a pressure-increasing means is provided which ensures a leading-away of fluid out of the outer pressure container (6) also in the submerged condition.

7. A submarine according to one of the preceding claims, **characterised in that** means (16, 17) are provided which on exceeding a predefined pressure in the liquid gas pressure container (3) lead gas and/or liquid gas to the outside of the pressure hull (2).

8. A submarine according to one of the preceding claims, **characterised in that** the pressure-increasing means functions whilst making use of the pressure prevailing in the outer pressure container (6) and/or in the liquid gas pressure container (3).

9. A submarine according to one of the preceding claims, **characterised in that** the liquid gas pressure container (3) is dimensioned such that its allowable operating excess pressure corresponds at least to the pressure at the submerged depth of the submarine.

10. A submarine according to one of the preceding claims, **characterised in that** the outer pressure container (6) is dimensioned such that its allowable operating excess pressure corresponds at least to the pressure at the submerged depth of the submarine.

11. A submarine according to one of the preceding claims, **characterised in that** a shut-off valve (12) arranged within the outer pressure container (6) is provided for the gas conduit (11) leading out of the outer pressure container (6) into the pressure hull (2).

12. A submarine according to one of the preceding claims, **characterised in that** the shut-off valve (12) is controlled in dependence on the gas concentration in the pressure hull (2).

13. A submarine according to one of the preceding claims, **characterised in that** at least one gas sensor (13) is provided for determining the gas concentration within the pressure hull (2).

14. A submarine according to one of the preceding claims, **characterised in that** there is provided a control which activates the shut-off valve (12) to close on exceeding a predefined gas concentration in the pressure hull (2).

15. A submarine according to one of the preceding claims, **characterised in that** at least one pressure sensor or gas sensor (13) is arranged within the outer pressure container (6), and that there are provided means (14) which on detecting an increased pressure or increased gas concentration in the outer pressure container (6) in particular in the fittings space (7) blocks off the supply of liquid gas out of the liquid gas pressure container (3).

## Revendications

1. Sous-marin comportant un réservoir sous pression de gaz liquide (3), en particulier un réservoir sous pression pour le stockage d'oxygène liquide (LOX), le réservoir sous pression de gaz liquide (3) étant disposé à l'intérieur de la coque épaisse (2) du sous-marin et étant entouré d'un réservoir sous pression extérieur (6), qui est également logé à l'intérieur de la coque épaisse (2) du sous-marin, **caractérisé en ce qu'**il est prévu des moyens qui, en cas de dépassement d'une pression pré-établie à l'intérieur de l'un des réservoirs sous pression (3, 6), conduisent du fluide issu du réservoir sous pression (3, 6) en dehors de la coque épaisse (2).

2. Sous-marin selon la revendication 1, **caractérisé en ce que** le réservoir sous pression extérieur (6) contient également l'ensemble des conduits (9) et accessoires de tuyauteries (12, 14) dirigeant du gaz liquide fourni à partir du réservoir sous pression de gaz liquide (3), y compris un évaporateur (10).

3. Sous-marin selon l'une des revendications précédentes, dans lequel le réservoir sous pression extérieur (6) est muni d'un conduit (16) sortant de la coque épaisse (2) du sous-marin, lequel conduit est obturé au moyen d'un dispositif de sécurité (17).

4. Sous-marin selon l'une des revendications précédentes, dans lequel le dispositif de sécurité est une soupape de surpression (17).

5. Sous-marin selon l'une des revendications précédentes, dans lequel le dispositif de sécurité est un disque de rupture.

6. Sous-marin selon l'une des revendications précédentes, dans lequel est prévu un dispositif d'accroissement de pression, qui garantit une sortie de fluide du réservoir sous pression extérieur (6) même en situation de plongée.

7. Sous-marin selon l'une des revendications précédentes, dans lequel sont prévus des moyens (16, 17) qui, en cas de dépassement d'une pression pré-établie dans le réservoir sous pression de gaz liquide (3), conduisent du gaz et/ou du gaz liquide vers l'extérieur de la coque épaisse (2).

8. Sous-marin selon l'une des revendications précédentes, dans lequel le dispositif d'accroissement de pression fonctionne en tirant profit de la pression régnant dans le réservoir sous pression extérieur (6) et/ou dans le réservoir sous pression de gaz liquide (3).

9. Sous-marin selon l'une des revendications précédentes, dans lequel le réservoir sous pression de gaz liquide (3) est dimensionné de telle façon que sa surpression de service admissible corresponde au moins à la pression à la profondeur de plongée du sous-marin.

10. Sous-marin selon l'une des revendications précédentes, dans lequel le réservoir sous pression extérieur (6) est dimensionné de telle façon que sa surpression de service admissible corresponde au moins à la pression à la profondeur de plongée du sous-marin.

11. Sous-marin selon l'une des revendications précédentes, dans lequel une vanne d'arrêt (12), disposée à l'intérieur du réservoir sous pression extérieur (6), est prévue pour le conduit de gaz (11) menant du réservoir sous pression extérieur (6) dans la coque épaisse (2).

12. Sous-marin selon l'une des revendications précédentes, dans lequel la vanne d'arrêt (12) est commandée en fonction de la concentration de gaz dans la coque épaisse (2).

13. Sous-marin selon l'une des revendications précédentes, dans lequel il est prévu au moins un capteur de gaz (13) pour la détermination de la concentration de gaz à l'intérieur de la coque épaisse (2).

14. Sous-marin selon l'une des revendications précédentes, dans lequel il est prévu une commande qui excite la vanne d'arrêt (12) dans le sens de la fermeture en cas de dépassement d'une concentration de gaz prédéterminée dans la coque épaisse (2).

15. Sous-marin selon l'une des revendications précédentes, dans lequel au moins un capteur de pression ou un capteur de gaz (13) est disposé à l'intérieur du réservoir sous pression extérieur (6), et en ce qu'il est prévu des moyens (14) qui, en cas de détection d'une pression accrue ou d'une concentration de gaz accrue dans le réservoir sous pression extérieur (6), en particulier dans l'espace (7) contenant les accessoires de tuyauteries, stoppent la distribution de gaz liquide à partir du réservoir sous pression de gaz liquide (3).
